(19) Europäisches Patentamt
European Patent Office
Office européen des brevets

(11) **EP 2 966 260 A1**

(12) **EUROPÄISCHE PATENTANMELDUNG**

(43) Veröffentlichungstag:
**13.01.2016   Patentblatt 2016/02**

(51) Int Cl.:
***F01D 5/04*** *(2006.01)*

(21) Anmeldenummer: **15171200.7**

(22) Anmeldetag: **09.06.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **09.07.2014   DE 102014213343**

(71) Anmelder: **Bosch Mahle Turbo Systems GmbH & Co. KG**
**70376 Stuttgart (DE)**

(72) Erfinder:
• **Striedelmeyer, Thomas**
  **70378 Stuttgart (DE)**

• **Schray, Jochen**
  **71739 Oberriexingen (DE)**
• **Angelusch, Anton**
  **71336 Waiblingen (DE)**
• **Strempel, Andreas**
  **73066 Uhingen (DE)**
• **Winkler, Gunter**
  **70193 Stuttgart (DE)**
• **Sögüt, Senol**
  **70569 Stuttgart (DE)**

(74) Vertreter: **BRP Renaud & Partner mbB**
**Rechtsanwälte Patentanwälte**
**Steuerberater**
**Königstraße 28**
**70173 Stuttgart (DE)**

(54) **TURBINENRAD EINES ABGASTURBOLADERS UND ZUGEHÖRIGES HERSTELLUNGSVERFAHREN**

(57)    Die Erfindung betrifft ein Turbinenrad (1) eines Abgasturboladers (2), welches aus einer TiAl-Legierung mittels Metallspritzgießen (MIM), selektivem Laserschmelzen (SLM) oder Elektronenstrahlschmelzen (EBM) hergestellt ist und bei welchem ein Quotient Q aus einem Durchmesser $d_s$ an den Turbinenrad-Austritts-Schaufelspitzen zu einem Durchmesser $d_N$ am Turbinenrad-Austritts-Schaufelfuß größer als 3,85 ist.

Fig. 1

EP 2 966 260 A1

**Beschreibung**

Die vorliegende Erfindung betrifft ein Turbinenrad eines Abgasturboladers. Die Erfindung betrifft außerdem einen Abgasturbolader mit einem solchen Turbinenrad sowie ein Verfahren zur Herstellung eines solchen.

Neben den bewährten Turbinenrädern aus Nickelbasislegierungen kommen in den letzten Jahren vermehrt gewichtsoptimierte Turbinenräder in Betracht, die insbesondere Leichtmetalllegierungen und keramische Werkstoffe nutzen. Vorteil eines gewichtsoptimierten Turbinenrades ist dabei die Reduzierung des Massenträgheitsmomentes und dadurch eine Verbesserung des Transientverhaltens eines damit ausgestatteten Abgasturboladers. Prädestiniert hierfür ist unter anderem der Einsatz von Titanaluminiden ($\gamma$-TiAl), da Titanaluminide eine etwa 50% geringere Dichte als konventionell verwendete Nickelbasislegierungen besitzen.

Diese Ti-Al-Turbinenräder werden heute vorwiegend durch Gussprozesse hergestellt. Beim Gießen von Nickelbasislegierungen sowie von TiAl wird das Turbinenrad heute von vorne, d. h. von der Turbinenradnase, angegossen, wobei der Gießprozess bzw. Gussprozess einigen Restriktionen unterliegt. Eine Herausforderung beim Gussprozess ist insbesondere auch der Durchmesser der Turbinenradnase bzw. der diametral engste Querschnitt am Angusspunkt. Im Zuge des Guss-Prozesses gibt es Restriktionen bezüglich eines minimalen Turbinenradnabendurchmessers bzw. -nasendurchmessers, welcher direkt Einfluss auf die Fließgeschwindigkeit im Gießprozess bzw. auf das Erstarrungsverhalten beim Gießen hat. Dieser minimal realisierbare Nabendurchmesser wiederum ruft Restriktionen hinsichtlich des Turbinenradgesamtdurchmessers auf.

Die vorliegende Erfindung beschäftigt sich daher mit dem Problem, für ein Turbinenrad eines Abgasturboladers bzw. generell einer Ladeeinrichtung eine verbesserte oder zumindest eine alternative Ausführungsform anzugeben, welche nicht nur eine hohe Fertigungsqualität gewährleistet, sondern zudem auch die Leistungsfähigkeit des Turbinenrades erhöht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Turbinenrad eines Abgasturboladers, bzw. ein radiales Turbinenrad aus einer TiAl-Legierung mittels eines besonderen Herstellungsverfahrens herzustellen, welches gleichzeitig eine Reduzierung des Durchmessers am Turbinenrad-Austritts-Schaufelfuß, d. h. im Bereich der Nabe, ermöglicht. Erfindungsgemäß wird dies durch Metallspritzgießen (MIM), selektives Laserschmelzen (SLM) oder Elektronenstrahlschmelzen (EBM) gewährleistet, wobei zusätzlich ein Quotient aus einem Durchmesser an den Turbinenrad-Austritts-Schaufelspitzen zu einem Durchmesser am Turbinenrad-Austritts-Schaufelfuß größer als 3,85 ist.

Dieser Wert hat sich aus Versuchen ergeben und als besonders effektiv herausgestellt, so dass im vorliegenden Fall im weitesten Sinne bereits von einem Grenzwert gesprochen werden kann. Beim Metallspritzgießen wird eine mit Binder versetzte TiAl-Legierung als Pulver in eine Spritzgussform eingespritzt, woraufhin anschließend das Turbinenrad aus der Werkzeug entformt wird. Es folgt das Entbindern und am Ende das Sintern. Das MIM-Verfahren unterscheidet sich dabei vom Gussverfahren, bei welchem die Turbinenradform mittels Wachs/Keramik hergestellt wird. Bei der Herstellung des Turbinenrades mittels MIM-Verfahren aus Titanaluminid wird das Turbinenrad von hinten, d. h. von einer Radrückenseite/Kalotte "gespritzt" und nicht wie beim Gießen von vorne gegossen. Dies ermöglicht es, die Turbinenradnase bzw. die Nabe vom Durchmesser her geringer zu halten als beim Gussprozess, da es keine Gussfunktion an sich gibt und dadurch auch die beim Gießen üblicherweise zu berücksichtigenden Parameter, wie z.B. Fließgeschwindigkeit im Gießprozess und Erstarrungsverhalten beim Gießvorgang, keine Rolle spielen. Beim Elektronenstrahlschmelzen (EBM) liegt die Titanaluminid-Legierung ebenfalls als Pulver vor, wobei als Energiequelle zum selektiven Aufschmelzen des Pulvers ein frei steuerbarer Elektronenstrahl dient. Das generierte Bauteil wird somit Schicht auf Schicht in einem Vakuum oder unter Schutzgasatmosphäre generiert. Hierbei wird das Pulver im Pulverbett Lage für Lage aufgeschüttet und definierte Bereiche belichtet. Das selektive Laserschmelzen arbeitet dabei analog zum EBM-Verfahren, wobei jedoch für den selektiven Schichtaufbau ein Laser verwendet wird. Im Unterschied zum reinen Lasersintern wird beim SLM-Verfahren der Stoff vollständig aufgeschmolzen. Auch beim EBM-/SLM-Verfahren hat die Turbinenradnase bzw. Turbinenradnabe keine Gussfunktion und kann deswegen bereits hinsichtlich ihres Durchmessers reduziert werden.

Kern der Erfindung ist somit eine Verschlankung von Nase/Nabe am Turbinenradaustritt durch die Herstellung des Titanaluminid-Turbinenrades mittels der genannten Verfahren, nämlich mittels Metallspritzgießen (MIM), Elektronenstrahlschmelzen (EBM) oder selektivem Laserschmelzen (SLM) und damit eine Gewichtsreduzierung.

Restriktionen in der "Verschlankung" der Turbinenradnase sind selbstverständlich hinsichtlich des Turbinenrad-Handlings in der Fertigbearbeitung zu berücksichtigen, so muss beispielsweise das Turbinenrad an der Turbinenradnase noch greifbar sein können und hinsichtlich einer möglichen Wuchtbarkeit muss noch genügend Material im Bereich der Turbinenradnasenebene zum Abtragen vorhanden sein. Die erfindungsgemäß eingesetzten und beschriebenen Herstel-lungsverfahren erlauben zudem die Herstellung des Turbinenrades mit höherer Geometriegenauigkeit, wodurch die Unwucht an sich bereits geringer ausfällt und dadurch weniger Wuchtmaße an der Turbinenradnase benötigt wird, um diese Unwucht ausgleichen zu können.

Durch die Verschlankung der Turbinenradnase bzw. Turbinenradnabe ergeben sich generell große Freiheiten im Bezug auf Auslegung des Massendurchsatzes des Turbinenrades und hinsichtlich der Darstellung kleinerer, leichterer und trägheitsoptimierter Turbinenräder. Durch die Reduzierung des Durchmessers des Turbinenrads am Turbinenaustritt im Bereich der Schaufelfüße können an sich die Schaufeln des Turbinenrads länger ausgebildet werden, wodurch ein positiver Einfluss auf den Durchsatz erreicht werden kann. Ein gleicher Durchsatz kann hingegen sogar erreicht werden, wenn die Schaufeln zwar die gleiche Länge wie bei bisherigen Turbinenrädern aufweisen, aufgrund des reduzierten Turbinenradnabendurchmessers, jedoch radial weiter innen bereits beginnen und dadurch der Gesamtdurchmesser des Turbinenrades reduziert wird. Durch die Reduzierung des Durchmessers im Bereich der Turbinenradnabe kann deutlich Material eingespart werden, wodurch insbesondere die Massenträgheit des Turbinenrades und indirekt darüber das Ansprechverhalten eines Abgasturboladers positiv beeinflusst werden können.

Generell ergeben sich folgende wesentliche Vorteile durch das erfindungsgemäße Turbinenrad:

- geringeres Gewicht und/oder reduzierte Baugröße,
- geringerer Materialaufwand verbunden mit reduzierten Kosten und verbesserter Ökobilanz,
- reduziertes Massenträgheitsmoment,
- neue Freiheit in Bezug auf Auslegung des Massendurchsatzes,
- eine Verbesserung des Schwerpunkts des Läufers (Verbund-Turbinenrad-Welle) aufgrund der geringeren Masse.

Die Vorteile des erfindungsgemäßen Turbinenrades lassen sich dabei sowohl für eine Radialturbine als auch für eine Diagonalturbine nutzen.

Die Erfindung beruht weiter auf dem allgemeinen Gedanken, einen Abgasturbolader mit einem in den vorherigen Absätzen beschriebenen erfindungsgemäßen Turbinenrad auszustatten. Ein derart modifizierter Abgasturbolader weist ein deutlich verbessertes Ansprechverhalten auf, da das Turbinenrad eine deutlich reduzierte Masse und damit auch ein deutlich reduziertes Massenträgheitsmoment besitzen. Hierbei kann das Turbinenrad am Schaufelfuß des Turbinenaustritts (dN) diametral verkleinert werden, um mit diesem Turbinenrad einen größeren Abgasmassendurchsatz zu erzielen, ohne besondere Maßnahmen an den Turbinenradschaufeln vorzunehmen. Dies ermöglicht im Umkehrschluss auch den Einsatz eines in Bezug auf Baugröße kompakteren Turbinenrades mit reduziertem Turbinenaußendurchmesser, da bei gleichem Abgasmassendurchsatz die Turbine sowohl am Turbineneintritt als auch am Turbinenaustritt verkleinert werden kann.

Die vorliegende Erfindung beruht zusätzlich auf dem allgemeinen Gedanken, ein verbessertes Verfahren zur Herstellung eines Turbinenrades für einen Abgasturbolader anzugehen, bei dem das Turbinenrad aus einer Titanaluminidlegierung mittels Metallspritzgießen, selektivem Laserschmelzen oder Elektronenstrahlschmelzen hergestellt wird. Zugleich wird für einen Quotienten aus einem Durchmesser an den Turbinenrad-Austritts-Schaufelspitzen zu einem Durchmesser am Turbinenrad-Austritts-Schaufelfuß ein minimaler Quotient von 3,85 festgelegt, so dass das mittels des erfindungsgemäßen Verfahren hergestellte Turbinenrad einen Quotienten von > als 3,85 aufweist. Die genannten Verfahren ermöglichen dabei eine deutlich gesteigerte Fertigungsgenauigkeit, insbesondere auch im Hinblick auf komplexe Schaufelstrukturen, wodurch es ebenfalls möglich ist, die im Bereich der Nabe angeordnete Masse für den Ausgleich von Unwuchten zu reduzieren.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

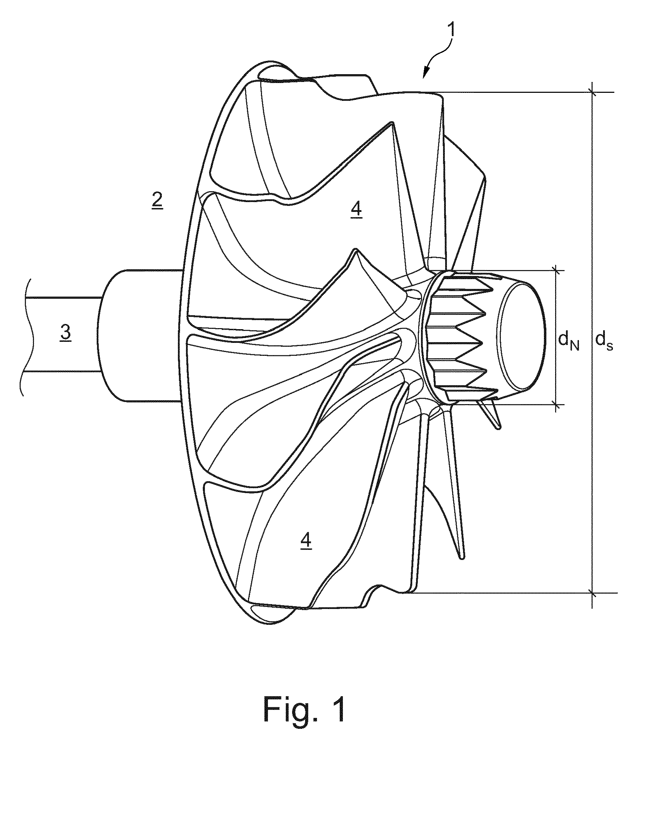

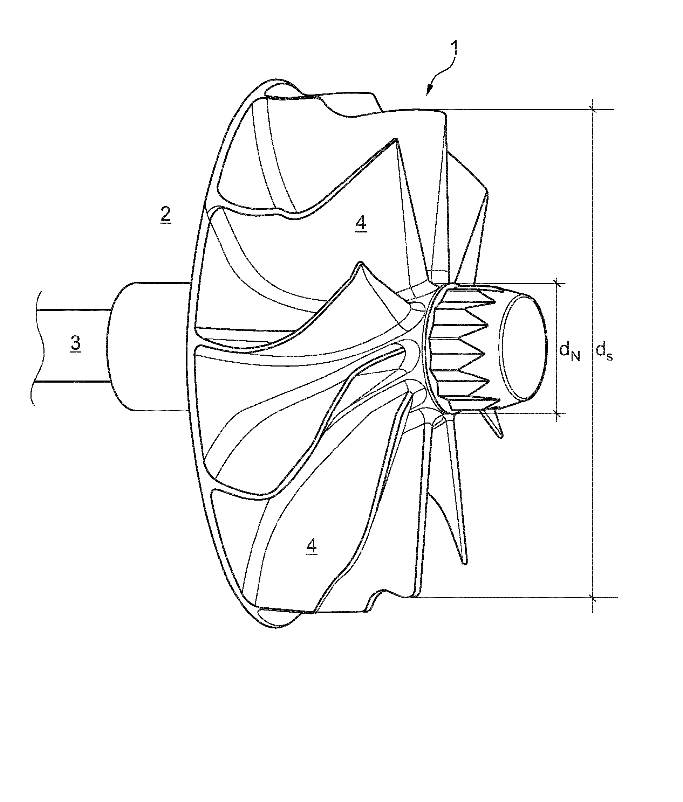

Die einzige Figur 1 zeigt ein erfindungsgemäßes Turbinenrad.

Im Falle der Figur 1, weist ein erfindungsgemäßes Turbinenrad 1, welches als Turbinenrad in einem Abgasturbolader 2 ausgebildet sein kann, einen Quotienten

$$Q = \frac{d_s}{d_N} > 3{,}85$$

auf.

Zudem ist das erfindungsgemäße Turbinenrad 1 aus einer Titanaluminidlegierung mittels Metallspritzgießen (MIM), selektivem Laserschmelzen (SLM) oder Elektronenstrahlschmelzen (EBM) hergestellt. Das Turbinenrad 1 ist dabei mit einer Welle 3 verbunden (z.B. mit einer Welle 3 verschweißt), und bildet dabei einen Läufer des Abgasturboladers 2.

Durch das Herstellen des erfindungsgemäßen Turbinenrades 1 mittels den genannten Herstellungsverfahren und mittels der Titanaluminidlegierung lässt sich ein deutlich reduziertes Gewicht im Vergleich zu herkömmlichen auf Nickelbasislegierungen beruhenden Turbinenrädern erzielen, wobei ein derartig geringes Gewicht auch ein reduziertes Massenträgheitsmoment zur Folge hat, was sich positiv auf ein Ansprechverhalten des Abgasturboladers 2 auswirkt. Die Reduzierung des Durchmessers des Turbinenrads am Turbinenaustritt im Bereich der Schaufelfüße ist dadurch gegeben, dass aufgrund der verbesserten Herstellungsgenauigkeit mittels den genannten Herstellungsverfahren kleinere Unwuchten vorhanden sind und dadurch auch eine Ausgleichsmasse zur Kompensation derartiger Unwuchten geringer ausfallen kann. Durch die erwähnten Herstellungsverfahren muss auch keine Gussnase mehr im Bereich der Nabe vorgehalten werden, sondern vielmehr lassen die Verfahren sogar zu, das Turbinenrad 1 von seiner Rückseite aus aufzubauen. Durch die Reduzierung des Durchmessers $d_N$ am Turbinenrad-Austritts-Schaufelfuß ist es zudem möglich, bei ansonsten gleichem Außendurchmesser die einzelnen Schaufeln 4 in Radialrichtung länger auszubilden, wodurch das Turbinenrad 1 insgesamt einen höheren Durchsatz ermöglicht.

Soll der Durchsatz nicht verändert werden, ermöglicht der derart reduzierte Durchmesser $d_N$ am Turbinenrad-Austritts-Schaufelfuß die Schaufeln 4 insgesamt radial nach innen zu versetzen und dadurch den gesamten Außendurchmesser des Turbinenrades 1 zu reduzieren, was sich vorteilhaft auf einen benötigten Bauraum des Turbinenrades und damit indirekt auch auf einen benötigten Bauraum des Abgasturboladers 2 auswirkt. Hierdurch ergeben sich insbesondere bisher nicht bekannte Freiheiten in Bezug auf die Auslegung des Massendurchsatzes des Turbinenrades 1.

Durch die Reduzierung der Masse des Turbinenrades 1 im Bereich der Nabe kann insgesamt Material eingespart werden, wodurch nicht nur Ressourcen geschont und Materialkosten eingespart, sondern zudem auch die Umweltverträglichkeit verbessert werden kann.

$$Q = \frac{d_s}{d_N} > 3{,}85 \,,$$

und

wobei das Turbinenrad (1) aus einer TiAl-Legierung mittels Metallspritzgießen (MIM), selektivem Laserschmelzen (SLM) oder Elektronenstrahlschmelzen (EBM) hergestellt wird.

**Patentansprüche**

1. Turbinenrad (1) eines Abgasturboladers (2), welches aus einer TiAl-Legierung mittels Metallspritzgießen (MIM), selektivem Laserschmelzen (SLM) oder Elektronenstrahlschmelzen (EBM) hergestellt ist und bei welchem ein Quotient Q aus einem Durchmesser $d_s$ an den Turbinenrad-Austritts-Schaufelspitzen zu einem Durchmesser $d_N$ am Turbinenrad-Austritts-Schaufelfuß größer als 3,85 ist

$$Q = \frac{d_s}{d_N} > 3{,}85 \,.$$

2. Abgasturbolader (2) mit einem Turbinenrad (1) nach Anspruch 1 oder 2.

3. Verfahren zur Herstellung eines Turbinenrads (1) mit einem Quotienten Q aus einem Durchmesser $d_s$ an den Turbinenrad-Austritts-Schaufelspitzen zu einem Durchmesser $d_N$ am Turbinenrad-Austritts-Schaufelfuß, der größer als 3,85 ist

Fig. 1

1

2

$\underline{4}$

$\underline{3}$

$\underline{4}$

$d_N$

$d_s$

Europäisches
Patentamt

European
Patent Office

Office européen
des brevets

# EUROPÄISCHER RECHERCHENBERICHT

Nummer der Anmeldung

EP 15 17 1200

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2008 059617 A1 (BOSCH MAHLE TURBO SYSTEMS GMBH [DE]) 2. Juni 2010 (2010-06-02) * Absätze [0001], [0009] - [0012], [0023], [0027]; Abbildung 1 * ----- | 1-3 | INV. F01D5/04 |
| A | US 2008/014457 A1 (GENNARO PAOLO [IT] ET AL) 17. Januar 2008 (2008-01-17) * Absätze [0002], [0009], [0019] - [0021], [0032] - [0035] * ----- | 1-3 | |

RECHERCHIERTE SACHGEBIETE (IPC)

F01D

Der vorliegende Recherchenbericht wurde für alle Patentansprüche erstellt

| Recherchenort | Abschlußdatum der Recherche | Prüfer |
|---|---|---|
| München | 3. November 2015 | Georgi, Jan |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 17 1200

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-11-2015

| Im Recherchenbericht angeführtes Patentdokument | Datum der Veröffentlichung | Mitglied(er) der Patentfamilie | | Datum der Veröffentlichung |
|---|---|---|---|---|
| DE 102008059617 A1 | 02-06-2010 | KEINE | | |
| US 2008014457 A1 | 17-01-2008 | AT | 544548 T | 15-02-2012 |
| | | ES | 2381854 T3 | 01-06-2012 |
| | | JP | 5330656 B2 | 30-10-2013 |
| | | JP | 2008069449 A | 27-03-2008 |
| | | US | 2008014457 A1 | 17-01-2008 |

EPO FORM P0461

Für nähere Einzelheiten zu diesem Anhang : siehe Amtsblatt des Europäischen Patentamts, Nr.12/82